# EUROPÄISCHE PATENTSCHRIFT

(11) **EP 2 117 747 B1**
(45) Veröffentlichungstag und Bekanntmachung des Hinweises auf die Patenterteilung: **20.04.2011**
(21) Anmeldenummer: 08700551.8
(22) Anmeldetag: 08.02.2008
(51) Int. Cl.: B21D 39/03, B21J 15/02, F16B 5/04

(54) **VERFAHREN ZUM CLINCHEN VON DICKEN METALLWERKSTÜCKEN UND VERWENDUNG EINES CLINCHWERKZEUGS**
METHOD FOR CLINCHING THICK METAL WORKPIECES AND USE OF A CLINCHING TOOL
PROCÉDÉ POUR RIVETAGE DE PIÈCES MÉTALLIQUES ÉPAISSES ET UTILISATION D'UN OUTIL DE RIVETAGE

(30) Priorität: 13.02.2007 EP 07102275
(43) Veröffentlichungstag der Anmeldung: 18.11.2009
(73) Patentinhaber: Inventio AG, 6052 Hergiswil (CH)
(72) Erfinder: TROJER, Andreas, A-1230 Wien (AT); KRAMPL, David, A-1100 Wien (AT); MATHEISL, Michael, A-2331 Vösendorf (AT); SCHÜTZ, Richard, A-1100 Wien (AT); NOVACEK, Thomas, A-2320 Schwechat (AT)
(86) Internationale Anmeldenummer: PCT/CH2008/000047
(87) Internationale Veröffentlichungsnummer: WO 2008/098390

(56) Entgegenhaltungen:
- WO-A-03/015579
- DE-A1- 3 923 182
- US-A1- 2004 168 297
- US-A1- 2006 096 075
- US-B1- 6 217 115
- "DIE TOX-VERBINDUNGSSYSTEME: DIE EINFACHHEIT IST UNSERE STAERKE" INTERNET CITATION, [Online] August 2003 (2003-08), XP002322871 Gefunden im Internet: URL:http://www.tox-de.com> [gefunden am 2005-03-31]

## Beschreibung

Die Erfindung betrifft das Clinchen von dicken Metallwerkstücken zum Herstellen tragfähiger Clinchverbindungen gemäss dem Oberbegriff des Anspruchs 1, sowie die Verwendung der entsprechenden Clinchverbindungen im Stahlbau gemäss dem Oberbegriff des Anspruchs 9.

Clinchen ist ein Umformfügeverfahren, das bereits seit längeren bekannt ist. Dieses verfahren wird auch als Durchsetzfügen bezeichnet. Das Clinchen ist eine umformtechnische Verbindungstechnologie, die je nach Ausführungsform ohne Hilfsfügeteil auskommt.

Für das Clinchen gibt es bezüglich der Erzeugung des Fügeelementes verschiedene varianten. Eine Charakterisierung des Clinchens ist folgendermaßen möglich:
- nach der Fügeelementausbildung: Clinchen mit und ohne Schneidanteil;
- nach der Matrizenform: starre und öffnende Matrize
- nach der Werkzeugkinematik: ein- und mehrstufiges Clinchen.

Im Folgenden geht es primär um das Clinchen ohne Schneidanteil. Dieses verfahren hat gewisse Vorteile gegenüber den konventionellen Verfahren, die zum Verbinden von Blechen oder anderen Werkstücken eingesetzt werden, wie zum Beispiel das Schweissen, das Punktschweissen, das Verbinden mittels Nieten bzw. Blindnieten und das Verwenden von Stanznieten. Gegenüber den konventionellen Verbindungeverfahren ist das Clinchen ohne Schneidanteil günstiger, wenn man die Kosten pro Verbindung betrachtet.

Das Clinchen von Blechen und anderen Metallwerkstücken, die dicker sind als 4mm, ist aus der US 2006/0096075 A1 bekannt. Wie im Rahmen der vorliegenden Erfindung festgestellt wurde, sind allerdings die Klemmkräfte bei diesem bekannten Verfahren sehr hoch, was beim Herausziehen des Stempels zur Beschädigung der Bleche bzw. Metallwarkstücke führen kann.

Aufgabe der Erfindung ist es ein verfahren bereit zu stellen, um Bleche und Träger aus dicken Blechen, vorzugsweise mit Dicken, die grösser sind als 4mm, mit geringeren Klemmkräften zu clinchen, um somit das Clinchen in Zukunft auch beim Stahlelementbau zuverlässig einsetzen zu können, wo es darauf ankommt, dass die entsprechenden Teile mit grösseren Momenten und Kraften belastbar sind. Mit anderen Worten ausgedruckt, soll das Clinchen für tragende und tragfähige sowie stützende Metallwerkstücke anwendbar gemacht werden. Dabei sollen dicke Metallwerkstücks so miteinander verbunden werden, dass eine optimale Hinterachnittausprägung und eine grösstmögliche Halsdicke erzielt werden, um eine entsprechende Festigkeit der Clinchverbindung zu gewährleisten.

Ausserdem sollen entsprechend optimierte verwendungen des Clinchens und entsprechend gefertigte stahlbauelemente vorgeschlagen werden.

Die Lösung der Aufgabe erfolgt
- für das Verfahren durch die Merkmale des Anspruchs 1, und
- für die Verwendung durch die Merkmale des Anspruchs 2.

Vorteilhafte Ausführungsbeispiele und Weiterbildungen der Erfindung sind durch die jeweiligen abhängigen Patentänsprüche umschrieben bzw. definiert.

Gemäss Erfindung ist es möglich, Stahlbleche und -träger bzw. Stahlprofile (hier allgemein als Metallwerkstücke bezeichnet) mit geringeren Klemmkräften zu clinchen und somit stabile und tragfähige Stahlbauelemente zuverlässig herzustellen, wobei die Metallwerkstücke zusammen eine Gesamtwerkstückdicke (tt) halben, die dicker bzw. größer ist als 8mm.

Erst mit den entsprechend dicken Metallwerkstücken und dem erfindungsgemässen Clinchverfahren lassen sich Stahlbauelemente ausreichender Tragfestigkeit und Stabilität zuverlässig herstellen.

Um dies zu ermöglichen, wurden die Clinchweckzeuge entsprechend weiterentwickelt und optimiert. Die erfindungsgemässen Werkzeuge zeichnen sich dadurch aus, dass sie einen konisch geformten Stempel mit zwei Übergangsbereichen haben, wobei der Übergangebereich im Bereich der Stirnendfläche einen größeren Winkel aufweist als der daran anschließende obere Übergangsbereich. Der größere Flankenwinkel kann kleiner oder gleich 10 Grad betragen und in einen Flankenwinkel von 5 Grad bis Null Grad übergehen. Der Durchmesser dieses Stempels liegt vorzugsweise im Bereich zwischen 10mm und 35mm. Besonderes bevorzugt sind Durchmesser zwischen 12mm (14mm, 16mm, 18mm) bis 20mm bzw. 25mm, wobei dieser Durchmesser von der Dicke der zu verbindenden metallwerkstücke abhängt und von der erforderlichen Festigkeit bzw. Zugkraft.

Durch die vorliegende Erfindung wird das Clinchen eine echte Alternative für das Schweissen, das bisher meistens als Fügeverfahren zum verbinden dicker Werkstücke (zum Beispiel ein St-37, St-44, St-52, St-70 Blech bzw. EN-S235, S275, S355, S460 Blech) oder Träger (Dicke > 4 mm) verwendet wird. Das Clinchen kann aber auch Niet- und Schraubverbindungen ersetzen.

Gemäss Erfindung können Bleche, Profile, Träger und andere Metalleinzelteile bzw. Metallwarkstücke unterschiedlicher Dicke und verschiedener Werkstoffe miteinander verbunden werden. Die Verbindung zweier Metallwerkstücke entsteht beim Clinchen ausschließlich und unmittelbar aus dem/den Werkstoff/en der zu verbindenden Metallwerkstücke. Die durch Clinchen verbundenen Elemente werden hier als geclinchtes Stahlbauelement bezeichnet.

Die vorliegende Erfindung ermöglicht es in zunehmendem Masse Metallwerkstückverbindungen, zum Beispiel Verbindungen auf Stahlträgern mit Blechprofilen bzw. Blechteilen oder Blechstreifen, nun auch im Aufzugs- und Fahrtreppenbau einzusetzen, wobei unter anderem ein Teil der Aufzugskabine oder des Fachwerkes bzw. Tragwerkes einer Fahrtreppe mittels Clinchtechnik hergestellt werden kann.

Es können aber auch verschiedene tragende Anbauteile mittels Clinchtechnik zum Beispiel an einem tragenden oder stützenden Gerüst, Gestell, Konsole, Skulptur, Chassis oder Rahmen befestigt werden. So lassen sich mittels Clinchen zum Beispiel Blechverkleidungen (Paneele) an Tragelementen anbringen.

Mit der vorliegenden Erfindung wird eine unlösbare Verbindung zweier Metallwerkstücke geschaffen, die zudem größe Haltekräfte (Zugkräfte und Scherkräfte) erreicht. Unter dynamischer Beanspruchung zeigt sich, dass die so hergestellten geclinchten Stahlbauelemente ein deutlich besseres Tragverhalten aufweisen als punktgeschweisste Verbindungen.

Es lassen sich gemäss Erfindung problemlos beschichtete, aber auch unbeschichtete Materialien miteinander verbinden, was besonders im Aufzugs- und Fahrtreppenbau neue Möglichkeiten der Materialwahl eröffnet. So können zum Beispiel verzinkte, lackierte, oder kunststoffbeschichtete Bleche und/oder Stahlträger miteinander verbunden werden, ohne dass die Beschichtung durch das Clinchen merkbaren Schaden nehmen wurde. Die Metalleinzelteile bzw. Metallwerkstücke können auch mit einer Antirostbeschichtung versehen werden, bevor sie durch Clinchen zu einem grösseren Stahlbauelement zusammen gefügt sind bzw. werden.

Es ist ein weiterer Vorteil des Clinchens, dass man zum Herstellen der Verbindung weder Vorlochung noch Hilfsfügeteile bzw. Verbindungsteile bzw. Verbindungsmaterial benötigt. Der Hauptvorteil des Clinchens gegenüber herkömmlichen Verfahren sind aber die geringen Fügekosten. Ausserdem findet kein Wärmeeintrag bzw. Wermeeinbringung in die zu verbindenden Werkstücke statt, so dass Verzug und Einbrand und Gefügeveränderungen vermieden werden, was zum Beispiel bei grossen und langen Stahlbauelementen, wie einem Tragwerk bzw. Fachwerk bzw. Formrahmen bzw. Fangrahmen bzw. Tragrahmen bzw. Traggestell, besonders vorteilhaft ist.

Weitere Einzelheiten und Vorteile der Erfindung werden im Folgenden an Hand eines Ausführungsbeispiels und mit Bezug auf die Zeichnung beschrieben. Es zeigen:
- Fig. 1: den Stempel eines Clinchwerkzeugs und zwei Metallwerkstücke, die durch Clinchen miteinander verbunden wurden, in einer stark vereinfachten, schematisierten Darstellung,
- Fig. 2A: einen ersten Schritt des erfindungsgemässen Clinchens, in einer schematisierten Darstellung, wobei die beiden übergangsbereiche des Stempels nicht dargestellt sind;
- Fig. 2B: einen zweiten Schritt des erfindungsgemässen Clinchens, in einer schematisierten Darstellung, wobei die beiden Übergangebereiche des Stempels nicht dargestellt sind;
- Fig. 2C: einen dritten Schritt des erfindungsgemässen Clinchens, in einer schematisierten Darstellung, wobei die beiden Übergangsbereiche des Stempels nicht dargestellt sind;
- Fig. 3A: einen Schnitt durch zwei geclinchte Metallwerkstücke;
- Fig. 3B: einen Teilschnitt bzw. Detail eines Bereichs des erfindungsgemässen Clinchwerkzeuges;
- Fig. 4A: einen Schnitt, der zwei geclinchte Metallwerkstücke bzw. metalleinzeltell und einen Teil des Clinchwerkzeuges (nicht erfindungsgemäß) zeigt, wobei der Stempel des Clinchwerkzeuges einen Durchmesser von 12mm hat;
- Fig. 4B: einen Schnitt, der zwei geclinchte Metallwerkstücke und einen Teil des Clinchwerkzeuges (nicht erfindungsgemäß) zeigt, wobei der Stempel des Clinchwerkzeuges einen Durchmesser von 14mm hat;
- Fig. 4C: einen Schnitt, der zwei geclinchto Matallwerkstücke und einen Teil des Clinchwerkzeuges (nicht erfindungsgemäß) zeigt, wobei der Stempel des Clinchwerkzeuges einen Durchmesser von 20mm hat;
- Fig. 5A: einen Schnitt durch einen schematisch dargestellten Stempel gemgäss Erfindung;
- Fig. 6: eine Seitenansicht einer Fahrtreppe bzw. eines Fahrsteiges mit dem fachwerk bzw. Tragwerk;
- Fig. 7: eine Seitenansicht eines Teils eines Fachwerkes mit Doppelclinchverbindungen, gemäss Erfindung;
- Fig. 8A: eine Teilansicht des Fachwerkes mit Doppelclinchverbindungen, gemäss Erfindung;
- Fig. 8B: einen Schnitt G-G durch die Doppelclinchverbindungen, gemäss Erfindung;
- Fig. 8C: eine Teilansicht eines Fachwerkes mit Schweissverbindungen, gemäss Stand der Technik;
- Fig. 9: eine Teilansicht eines weiteren Fachwerkes mit Einfachclinchverbindung, gemäss Erfindung;
- Fig. 10: eine Teilansicht eines Mittelauflagers für ein Fachwerk mit Clinchverbindungen, gemäss Erfindung.

Es geht im Rahmen der vorliegende Patentanmeldung, wie eingangs bereits angedeutet, um das Clinchen ohne Schneidanteil. Diese Art des Clinchens ist ein reiner Umformfügeprozess, Das Verbinden der Werkstücke wird lediglich mittels Durchsetzen in Verbindung mit Einsenken und nachfolgendem Stauchen realisiert. Der Grundgedanke bei der Entwicklung dieses Verfahrens ohne Schneidanteil ist vor allem das Streben nach erhöhter Verbindungesteifigkeit infolge des größeren Materialzusammenhalts.

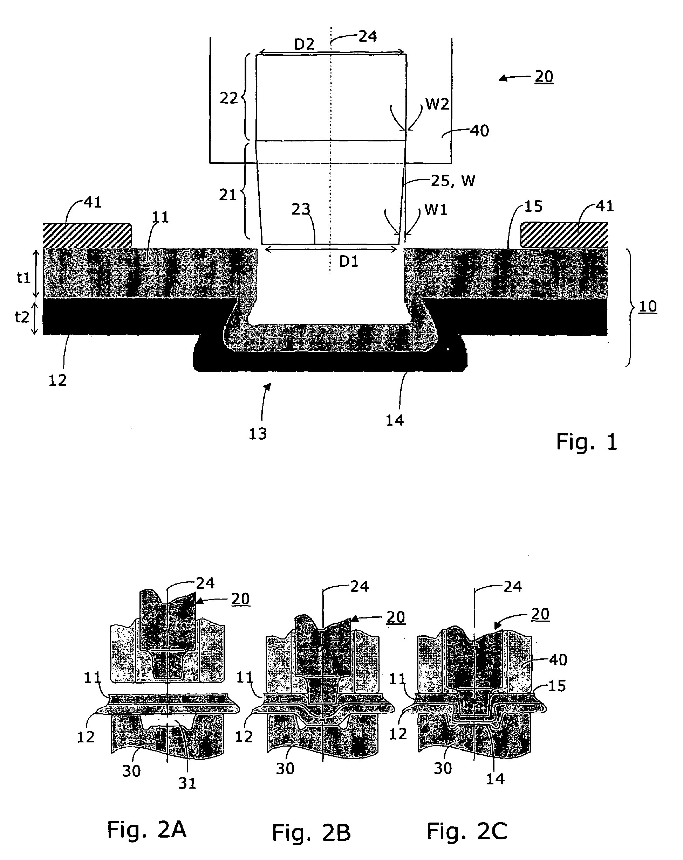

Das Prinzip der Erfindung ist in Fig. 1 rein schematisch dargestellt. Gezeigt sind zwei Metallwerkstücke 11 und 12, die durch eine Clinchverbindung 13 miteinander verbunden wurden. Ein Teil des Stempelwerkzeugs 20, der hier als Stempel bezeichnet wird, ist oberhalb der Clinchverbindung 10 oder des Clinchpunktes 10 gezeigt.

Das Clinchwerkzeug 20 umfasst einen Stempel und ein Gegenwerkzeug 30, das als Matrize oder als Amboss ausgebildet sein kann. Der Stempel ist in Bezug auf seine Rotationsachse 24 rotationssymmetrisch ausgelegt. Der Stempel weist eine konzentrisch zur Rotationsachse 24 angeordnete Flanke 25, mit Flankenwinkel W auf. Bezüglich einer endständigen Stirnendfläche 23 des Stempels, wird bei der Flanke 25 zwischen einem an die Stirnendfläche 23 angrenzenden unteren übergangsbereich 21 der Flanke 25 mit Flankenwinkel W1 sowie einem oberen Übergangsbereich 22 der Flanke 25 mit Flankenwinkel W2 unterschieden. Die beiden Übergangsbereiche 21, 22-gehen ineinander über. Dabei können sie wie in den Auaführungsbeispielen gemäss Fig. 1, 3B und 5A gezeigt, auf unstetige Art und Weise ineinander übergehen und unterschiedliche Flankenwinkel W1, W2 aufweisen. Die zu verbindenden Metallwerkstücke 11, 12 (z.B. ein Stahlträger mit Dicke t1 und ein Blech mit Dicke t2, mit t1 > t2) werden durch den Stempel ähnlich wie beim Prägen oder Stauchen unter plastischer Deformation in eine Kuhle bzw. Ausnehmung bzw. Hohlraum bzw. Verformungsraum 31 der Matrize 30 gedrückt, wie in Fig. 2A - 2C gezeigt. Durch eine spezielle Gestaltung der Kuhle bzw. Ausnehmung bzw. Hohlraum bzw. Verformungsraum 31 entsteht eine Clinchverbindung 13, die eine druckknopfähnliche bzw. stauchpunktähnliche bzw. prägepunktähnliche Form aufweist. Die Clinchverbindung 13 verbindet die Metallwerkstücke 11, 12 form- und kraftschlüssig miteinander, wie in Fig. 1, Fig. 2C und Fig. 3A und Fig. 4 schematisch angedeutet.

Die Figuren 2A - 2C zeigen in drei Stufen die Herausbildung der Clinchverbindung 13 ohne Schneidanteil mit starrer Matrize 30. In den Figuren 2Ä - 2C sind die beiden Hatallwerkstücke 11, 12 der Einfachheit halber mit gleicher Dicke dargestellt.

In Fig. 2A ist zu erkennen, dass das erste Metallwerkstück 11 und das zweite Metallwerkstück 12 aneinandergefügt d.h. aufeinander positioniert werden. Dann werden die beiden aufeinander gelegten Metallwerkstücke 11, 12 zueinander ausgerichtet, zum Beispiel mittels einer Schablone, und dann zusammen auf einer Bearbeitungsflache der als Gegenwerkzeug dienenden Matrize 30 bereitgestellt. In Fig. 2B ist gezeigt wie der Stempel des Stempelwerkzeuges 20 zugestellt wird und bereits zum Teil in die Werkstücke 11 und 12 eingesenkt wurden. Die werkstücke 11 und 12 verformen sich unter dem hohen Druck des Stempels und das Material "fliesst" in die Kuhle bzw. Ausnehmung bzw. Hohlraum bzw. Verformungsraum 31 der Matrize 30. Das Eindrücken bzw. Einsenken des Stempels erfolgt bis die Unterseite 14 des zweiten Metallwerkstückes 12 weitestgehend gegen den Boden der Ausnehmung bzw. Hohlraum bzw. Verformungsraum bzw. Kuhle 31 der Matrize 30 anliegt. In einem weiteren Schritt wird der Stempel dann herausgezogen (dieser Schritt entspricht im Wesentlichen der in Fig. 1 gezeigten Situation).

Gemäss Erfindung kommt beim Trennen vorzugsweise ein Abstreifer bzw. Niederhalter 40 zum Einsatz, der das Trennen des Stempels nach der Umformung der Metallwerkstücke 11 und 12 erleichtert. Ein solcher Abstreifer bzw. Niederhalter 40 ist besonders dann vorteilhaft, wenn der Stempel aufgrund der beim Umformen auftretenden Kräfte und Materialverformungen in der Clinchverbindung 13 festklemmen sollte. Der Abstreifer 40 stützt sich (quasi) gegenüber der Oberfläche 15 des oberen bzw. stempelseitigen Metallwerkstückes 11 ab, während der Stempel zurückgekommen bzw, zurückgezogen wird. Bei Kenntnis der vorliegenden Erfindung kann der Fachmann natürlich an Stelle eines stempelseitigen Abstreifers auch einen matrizenseitigen Abstreifer realisieren.

Vorzugsweise werden die zu verbindenden Metallwerkstücke 11 und 12 durch einen Niederhalter, der in Fig. 1 durch die Nummer 41 bzw. 40 gekennzeichnet ist, gegen bzw. an die Matrize 30 gedrückt. Das Stempelwerkzeug 20 umfasst einen Druckzylinder (z.B. einen Hydraulikzylinder, Pressgaszylinder, pneumohydraulischen Zylinder, servoelektrischen Zylinder), der den sogenannten Stempelvorhub in Richtung der Metallwerkstücke 11 und nachfolgend 12 bewirkt. In einer ersten Phase des Stempelvorhubs wird der Stempel zugestellt (Fig. 2A), dann erfolgt die Einsenkphase bei welcher der Stempel in die Metallwerkstücke 11, 12 eingesenkt und diese gestaucht und verformt werden (Figuren 2B und 2C). Abschliessend erfolgt eine als Stempelrückhub bezeichnete Phase (siehe Fig. 1). Dann kann das (teil-) fertige bzw. verbundene bzw. zusammengefügte Stahlbauelement entnommen werden oder es können weitere Clinchverbindungen angebracht werden.

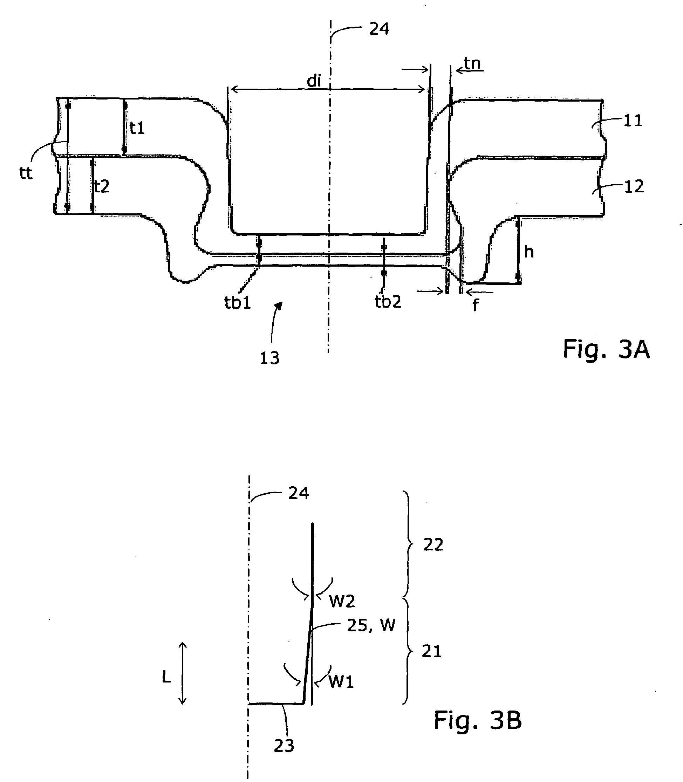

Infolge des Stauchdruckes während des Einsenkens kommt es zu einem Querfließen des Werkstoffes der Metallwerkstücke 11 und 12, wodurch die Matrize 30 mit Kuhle bzw. Ausnehmung bzw. Hohlraum bzw. Verformungsraum 31, zum Beispiel in Form einer (eingearbeiteten) Ringnut, weitestgehend bzw. ganz ausgefüllt und ein Hinterschnitt f des stempelseitigen Metallwerkstücks 11 im matrizenseitigen Metallwerkstück 12 erzeugt wird (siehe Fig. 3A). Für die beurteilung einer Clinchverbindung 13, wie in Fig. 3A gezeigt, sind Hinterschnitt f und Halsdicke tn am wichtigsten bzw. bedeutsamsten, da die Tragfähigkeit der Clinchvorbindung 13 in direkter Korrelation zu diesen Kenngrößen steht. Diese beiden Kenngrössen sind sehr wichtig für die stabilität und Festigkeit der erfindungagemässen Stahlbauelemonte. Ein typischer Wert für den Hinterschnitt f beträgt 0.5mm und ein typischer Wert für die Halsdicke tn beträgt 1.5mm.

Eine Clinchverbindung 13 und die Werkstücke 11, 12 können zusätzlich durch folgende Angaben charakterisiert werden: Innendurchmesser des Fügeelementes bzw. Stempels di, Überstandshöhe h, Restbodendicke tb2 des matrizenseitigen Metallwerkstücks 12, Restbodendicke tb1 des stempelseitigen Metallwerkstücks 11, matrizenseitige Metallwerkstückdicke t2, stempelseitige Metallwerkstückdicke t1, und Gesamtwerkstückdicke tt.

Es wurden verschiedene Versuche und Experimente gemacht, um den an sich bekannten Clinchprozess zu optimieren und so abzuändern, um auch Metallwerkstücks 11, 12, die dicker sind als 4mm, zu einem Stahlbauelement zusammenclinchen zu können, ohne dass zu hohe Klemmkräfte auftreten. Es wurden Simulationen gemacht und anschliessend verschiedene Werkzeuge gefertigt und Fügeversuche durchgeführt, um die (im Experiment) ermittelten Querschnitte, Füge- und Niederhaltekräfte mit der Referenz aus der Simulation vergleichen zu können. Als Grundlage der Üntersuchungen zur Werkzeugauslegung dienten Warkzeuggestaltungegrundsätze für das Clinchen ohne Schneidanteil mit starrer Matrize 30.

Erste Untersuchungen haben ergeben, dass für die Herstellung einer Clinchverbindung 13 für einen kleinen Stempeldurchmesser (Durchmesser D2=12mm oder 14mm) Fügekräfte von ca. 400 kN bis 510 kN und für den größeren Stempeldurchmesser (D2=20mm) von ca. 670 kN (beides inkl. Niederhaltekraft) angewendet werden müssen. Diese Ergebnisse an sich liegen im Bereich des zu erwartenden Resultates. (Allerdings kam es trotz Werkzeugschmierung zu einem starken Klemmen des Stempels im Werkstück.)

Genauere Untersuchungen zu dem Klemmen des Stempels haben gezeigt, dass das Klemmen durch eine Radialspannung verursacht wird, die auf die Flanke des Stempels einwirkt. Es hat sich gezeigt, dass besonders im oberen Übergangsbereich 22 hohe Radialspannungen auftreten.

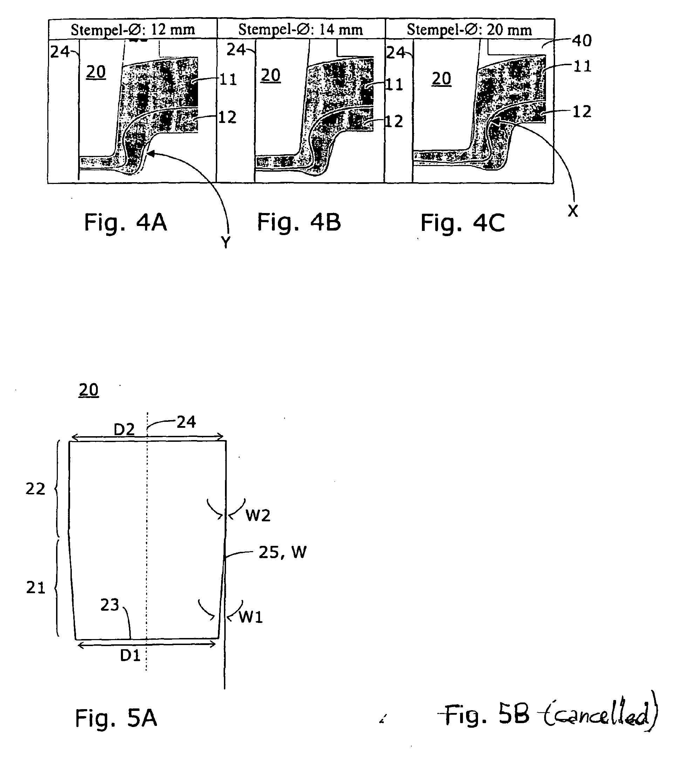

Nun wurde in einem weiteren Optimierungsschritt die Geometrie des Stempels gezielt so verändert, dass eine geringere Radialspannung auf die Flanke 25 wirkt. Aufgrund der Tatsache, dass bei den ersten Werkzeugvarianten der Wert für die Halsdicke tn und der Wert für den Hinterschnitt f der Stempel mit den Durchmessern D2=12 mm und D2=14 mm nahezu gleich waren, wurden weitere Optimierungen vorgenommen. Es wurden dabei auch Untersuchungen an Werkstücken mit verschiedener Gesamtwerkstückdicke tt und mit Werkstücken 11, 12 gemacht, die jeweils unterschiedliche Dicken t1, t2 haben. Dabei zeigte sich, dass handelsübliche bzw. konventionelle Stempel nicht nur die starke Tendenz zum Klemmen zeigen wenn man zu Gesamtwerkstückdicken tt > 8mm geht, sondern dass sich im Bereich zwischen den Werkstücken 11, 12 ein Hohlraum (siehe X in Fig. 4C) bildet. Dieser Hohlraum x beeinträchtigt und verringert die Festigkeit der entsprechenden Clinchverbindung 13 sowie die Stabilität des gesamten Stahlbauelementes.

Die verschiedenen Optimierungsschritte haben zu der Erkenntnis geführt, dass die Ausgestaltung der Flanken des Stempels einen unmittelbaren Einfluss auf das Klemmen und die Bildung des Hohlraums X haben. Um diese beiden negativen Effekte zu reduzieren oder ganz zu unterbinden, wurden Stempel entwickelt und getestet, die mindestens teilweise konisch geformt sind. Bei geeigneter Auswahl des entsprechenden Flankenwinkels W, W1, w2 konnte das Klemmen reduziert oder ganz verhindert werden, ohne dass es zu einer spürbaren Hohlraumbildung kam. Es hat sich gezeigt, dass diese beiden Effekte nur teilweise zusammenhängen und sich teilweise sogar gegenläufig verhalten. Durch die Auswahl eines geeigneten winkelbereiches konnten beide Effekte minimiert werden. Damit wurde die Grundlage für das Dickblechclinchen von stabilen Stahlbauelementen, mit Clinchverbindungen 13, gelegt.

Bei den in den Figuren 4A bis 4C gezeigten und im Folgenden beschriebenen Untersuchungen hat der nicht erfindungsgemässe Stempel jeweils einen konstanten Stempel-Flankenwinkel W = 5°, d.h. D1 < D2. Oder mit anderen Worten ausgedrückt, mindestens derjenige Teil des Stempels, der beim Einsenken mit den Werkstücken 11 und 12 in Kontakt kommt verjüngt sich nach unten (d.h. in Richtung des werkstückseitigen Endes des Stempels) hin.

Einige Aspekte der verschiedenen Untersuchungen sind in den Figuren 4A bis 4C dargestellt, weil sie für erfindungsgemäße Stempel analog gelten. Gezeigt wird das Fliessverhalten der Werkstücke 11, 12 beim Einsatz von Stempeln mit verschiedenen Durchmessern. In Fig. 4A ist gezeigt, wie sich die zwei Metallwerkstücke 11, 12 verformen, wenn der Stempel einen Durchmesser von 12mm aufweist, In Fig. 4B ist gezeigt, wie sich die zwei Metallwerkstücke 11, 12 verformen, wenn der Stempel einen Durchmesser von 14mm aufweist. Fig. 4C zeigt, wie sich die zwei Metallwerkstücke 11, 12 verformen, wenn der Stempel einen Durchmesser von 20mm aufweist. In allen drei Abbildungen ist eine Momentaufnahme gezeigt bevor der Stempelrückhub einsetzt.

Man kann anhand der Figuren 4A bis 4C erkennen, dass der Durchmesser D2 des Stempels einen Einfluss auf das Querfliessen der Werkstoffe bzw. Metallwerkstücke hat. Bei dem Stempel mit 12mm Durchmesser fliesst das Material des Metallwerkatücks 12 nicht ganz in den durch die Kuhle bzw. Ausnehmung 31 gebildeten Hohlraum, wie im durch Y gekennzeichneten Bereich zu erkennen ist. Bei einem 14mm Stempel ergibt sich eine gute "Füllung" der Kuhle bzw. Ausnehmung 31. Verwendet man einen Stempel mit 20mm Durchmesser, so zeigt sich ein Hohlraum (in Fig. 4C mit X bezeichnet) zwischen den Werkstücken 11 und 12.

Wie die diversen Untersuchungen und Forschungen gezeigt haben, ist der Stempeldurchmesser nur einer von verschiedenen Parametern, die einen direkten Einfluss auf den Clinchvorgang und die Festigkeit der Clinchverbindung haben. Es hat sich gezeigt, dass beim Clinchen dicker Werkstücke mit tt > 8mm die Ausgestaltung der Flanke 25 eine besonders wichtige und bedeutende Rolle spielt.

Die vorliegende Erfindung zeichnet sich dementsprechend dadurch aus, dass der Stempel, der bei der Umformung in die Metallwerkstücke 11 und 12 eingesenkt wird, konisch geformt ist. Die konische Form des Stempels erstreckt sich mindestens über einen Teil (als Übergangsbereiche 21, 22 bezeichnet) derjenigen Länge L des Stempels, die in die Werkstücke 11, 12 eingesenkt bzw. eingedrückt wird. Die konische Form ergibt sich dadurch, dass die Flanke 25 des Stempels, siche Fig. 3B, mindestens im unteren konischen Übergangsbereich 21 zu der Stirnendfläche 23 konisch geformt ist und einen Flankenwinkel W1 aufweist, der kleiner oder gleich 10 Grad, vorzugsweise kleiner oder gleich 5 Grad ist. Wie in den Fig. 1 sowie 5A weiter gezeigt, ist der Flankenwinkel W2 des oberen konischen Übergangsbereichs 22 kleiner als der Flankenwinkel Wls vorzugsweise kleiner oder gleich 5 Grad (Ausführungsbeispiele gemäss Fig. 4A bis 4c sowie 5B).

Besonders bewährt haben sich Stempel mit einem Durchmesser D2 zwischen 10mm und 20mm und mit einem Flankenwinkel W1, W2, der von einem ersten Winkel W1 übergeht in einen zweiten Winkel W2, wobei der erste Winkel W1 kleiner oder gleich 10 Grad und vorzugsweise kleiner oder gleich 5 Grad beträgt und der zweite Winkel W2 kleiner oder gleich 2 Grad, und vorzugsweise kleiner oder gleich 1 Grad beträgt. Dabei befindet sich der erste Winkel W1 im unmittelbaren (unteren und konischen) Übergangsbereich 21 zur Stirnendfläche 23 (d.h. im Bereich des werkstückseitigen Endes des Stempels) und der zweite Winkel W2 auf der vom Metallwerkstück 11, 12 wegführenden bzw. hinaushaltenden bzw. hinausragenden (oberen und konischen) Übergangsbereich 22 (d.h. im werkzeügseitigen Bereich des Stempels).

Diese Ausführung von konischen Stempeln zeigt eine deutlich geringere Tendenz zum Klemmen und es bilden sich keine (oder schwach ausgeprägte) Hohlraume X. Der Vorteil der geringeren Radialspannung und damit der geringeren Tendenz zum Klemmen wird jedoch durch die Entstehung des Hohlraumes. X zwischen den Metallwerkstücken 11, 12 "erkauft". Das heisst, der Flankenwinkel W, W1, W2 kann nicht beliebig gewählt werden, da sonst der Hohlraum X zu gross und die Festigkeit der Clinchverbindung zu klein werden würde.

Ideal sind Ausfühsungsformen des Stempels, bei denen die durch den Flankenwinkel erzeugte Flankenrücknahme bzw. Flankenreduzierung nicht zu gross ist, da bei zu grosser Flankenrücknahme bzw. Flankenreduzierung der radial gerichtete Druck auf die Werkstücke 11, 12 zu gering wird und sich damit das Querfliessen der Werkstoffe bzw. der Metallwerkstücke reduziert.

Die angegebenen Winkelwerte für W, W1, W2 haben sich auch bewährte weil die mit diesen Stempeln erzeugten Clinchverbindungen ähnliche, vergleichbare Werte für die Halsdicke tn und den Hinterschnitt f aufweisen, wie die handelsüblichen, gebräuchlichen rein zylinderischen Dünnblech-Stempel. Dies spricht für eine vergleichbare, identische Zugfestigkeit der entsprechenden Clinchverbindung 13.

Die konische Form des Stempels erstreckt sich mindestens über die Übergangsbereiche 21, 22 mit derjenigen Länge L des Stempels, die in die Werkstücke 11, 12 eingesenkt werden. Diese Länge L bei Metallwerkstücken deren Gesamtwerkatückdicke tt > 8mm kann wie folgt ermittelt werden: 0,3 tt ≤ L ≤ 2 tt. D.h., die konisch geformten Übergangsbereiche 21, 22 entsprechen zwischen drei Zehntel der Gesamtwerkstückdicke tt und der zweifachen Gesamtwerkstückdicke tt.

Eine erfindungsgemässe Stempelform wird im Folgenden anhand der Figuren 1 und 5A zusammenfassend erläutert.

| | |
|---|---|
| Fig. | 5A,1 |
| Typische Durchmesser | D1 < D2 und 10mm ≤ D2 ≤ 30mm |
| Länge L der Übergangsbereiche 21, 22 | 0,3 tt ≤ L ≤ 2 tt |
| Winkel | W1 ≤ 10 Grad im unteren Übergangsbereich 21 und 0 Grad < W2 im oberen Übergangsbereich 22, wobei W1 > W2 |

Die erzielten Festigkeiten, die mit den erfindungsgemässen Stempeln, zum Beispiel mit einem Stempel mit 12mm Durchmesser und einer Stempelflanke (Fig. 5A), erreicht werden, ,betragen im Mittel mehr als 50 kN bzw. 55 kN. Bei besonders sorgfältig ausgewählten Bedingungen liegt die Zugkraft sogar bei ca. 58 kN und streut nur geringfügig um wenige Prozent.

Für die Abstreif(er) kraftgestaltung des Abstreifers 40 sind zwei Kriterien zu berücksichtigen. Zum einen muss die Abstreifkraft bzw. Abstreiferkraft größer als die Klemmkraft des Stempels sein. Dieser Wert ist natürlich stark von der verwendeten Stempelgeometrie, wie beschrieben wurde, aber auch von der Schmierung bzw. Beschichtung der Werkzeuge abhängig. Maximale Auswerferkräfte von 30 kN bis 40 kN haben zu sehr zuverlässigen Ergebnissen geführt. Bei einer optimalen gestaltung der Flankenwinkel bzw. der Konizität des Stempels, reichen Auswerferkräfte von 25 kN. Für den Stempel (Fig. 5A) kann sogar eine weitere Reduzierung der Auswerferkraft in Betracht gezogen werden, da es hier nie zum Klemmen des Stempels kommen wird.

In einer besonders vorteilhaften Ausführungsform fungiert der Abstreifer 40 gleichzeitig auch als Niederhalter (41) und ist so dimensioniert, dass die Metallwerkstücke 11, 12 eine möglichst geringe Verformung erfahren, um den Verzug der Werkstücke 11, 12 so gering wie möglich zu halten bzw. frei zu halten.

Es lassen sich mit den erfindungsgemässen Stempeln und den Clinchwerkzeugen, respektive Clinchmaschinen, die entsprechende Stempel aufweisen bzw. besitzen, besonders stabile und tragfähige Stahlbauelemente auf einfachste, müheloseste, kostengünstigste und zuverlässigste Art und Weise herstellen. Die Kosten für diese Stahlbauelemente mit Clinchverbindungen 13 liegen unter denen von geschweissten, genieteten oder verschraubten Verbindungen. Die Verbundmaterialkosten für Stahlbauelemente mit Clinchverbindungen 13 liegen bei Null, Weiters ist die Arbeitszeit auf ein Minimum beschränkt.

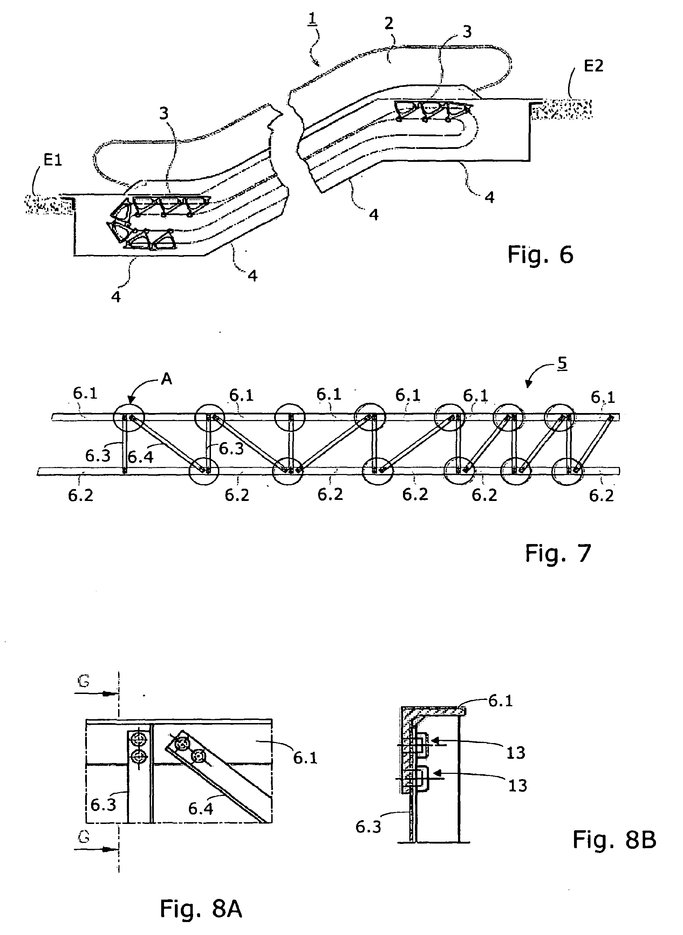

In Fig. 6 ist eine Fahrtreppe 1 in einer Seitenansicht gezeigt. Die Fahrtreppe 1 umfasst eine Balustrade 2 mit umlaufendem Handlauf und eine Endloskette mit Trittstufen bzw. Stufen 3. Unterhalb der Balustrade 2 der Fahrtreppe bzw. des Fahrsteiges ist typischerweise eine Stahlkonstruktion 4 angeordnet, welche so ausgeführt ist, dass sie den Zwischenraum bzw. die Stützweite zwischen zwei Etagen E1 und E2 überdrückt und die Elemente bzw. Bauteile bzw. Baugruppen der Fahrtreppe 1 bzw. des Fahrsteiges trägt.

Diese Stahlkonstruktion 4 muss höchsten Anforderungen genügen und ist daher teuer und aufwendig in der Herstellung. Gemäss Erfindung werden nun Fachwerkstahlbauelemente bzw. Fachwerktragelement 5 verwendet, wie in Fig. 7 gezeigt. Ein solches Fachwerkstahlelemente bzw. Fachwerkelement 5 kann zwei sich in Längsrichtung erstreckende Stahlträger bzw. Profilträger 6.1 und 6.2 aufweisen. Besonders bevorzugt sind Stahlträger mit einem L-, I- oder U Profil, sowie Rohre oder Formrohre. Diese beiden Stahlträger 6.1, 6.2 werden durch eine Anzahl von Flachblechen bzw. Flacheisen oder Blechprofilen bzw. Stahlprofilen 6.3, 6.4 miteinander verbunden. Die Flachbleche bzw. Flacheisen oder Blechprofilen bzw. Stahlprofilen 6.3, 6.4 sind gemäss Erfindung mittels einer oder zwei oder drei oder mehrerer Clinchverbindungen 13 an jedem dieser Stahlträger bzw. Profilträger 6.1 und 6.2 befestig und bilden so einen stabilen Fachwerkrahmen bzw. eine Fachwerktragwand bzw. ein Fachwerktragelement. Wie in Fig. 7 zu erkennen ist, ordnet man die Flachbleche bzw. Flacheisen oder Stahlprofile bzw. Blechprofile typischerweise so an, dass jeweils abwechselnd ein senkrechter Steher bzw. eine Strebe 6.3 auf eine schräg stehende Strebe bzw. Diagonale 6.4 folgt. Die Clinchverbindungen 13 sind in Fig. 7 durch Kreise "A" angedeutet

In den Fig. 8A und 8B sind Details eines erfindungsgemässen Stahlbauelements 5 gezeigt. Zu erkennen ist einer der Stahlträger 6.1 und zwei der Flachbleche bzw. Flacheisen oder Blechprofile bzw. Stahlprofile 6.3, 6.4. Im gezeigten Beispiel handelt es sich bei dem Stahlträger 6.1 und einen L.Träger bzw. Winkel mit einer Materialdicke t1 > 4mm und bei den Streben bzw. bei den Stehern und Diagonalen um gewinkelte Blechprofile bzw. Flacheisen bzw. Stahlprofile bzw. Stahlbauprofile 6.3, 6.4 mit einer Materialdicke t2 grösser gleich 3mm. In Fig. 8B ist ein Schnitt durch zwei nebeneinander angeordnete Clinchverbindungen 13 zu sehen. Die entsprechende Verbindung wird auch als Doppelclinchverbindung bezeichnet.

Gemäss Erfindung werden Stahlbauelemente als besonders verteilhaft angesehen, die unterschiedlich dicke Metallwerkstücke (z.B. den Längsträger bzw. Profilträger 6.1 und die Blechprofile bzw. Stahlprofile bzw. Stahlbauprofile 6.3, 6.4) miteinander verbinden, wobei die Clinchverbindungen 13 vorzugsweise von der dickeren Werkstückseite her angebracht werden. D.h., der Stempel des Clinchwerkzeugs wird von der Seite des dickeren Metallwerkstücks her eingesenkt und die Clinchverbindung bildet sich auf der gegenüberliegenden Seite (siehe Fig. 8B). Mit anderen Worten ausgedrückt, werden Clinchverbindungen bevorzugt, bei denen das dickere Material durch lokale Umformung in das dünnere Material durch Querfliessen zu einer festen Verbindung umgeformt wird.

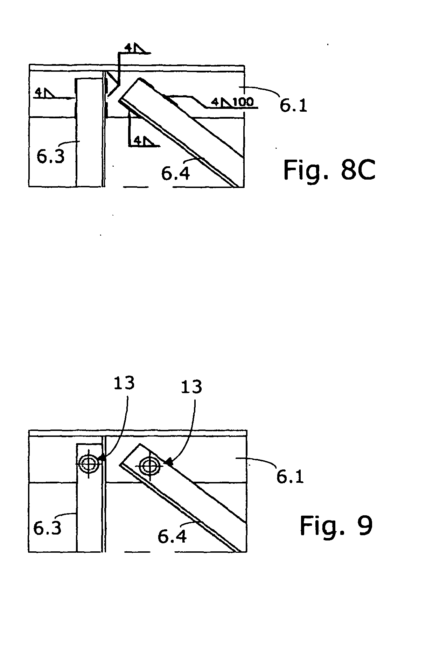

In Fig. 8C ist zum vergleich ein Teil eines Fachwerkes bzw. Fachwerktragrahmens gezeigt, dessen Werkstücke 6.1, 6.3, 6.4 mittels fünf oder sechs Sehweissverbindungen miteinander verschweisst wurden. Es liegt auf der Hand, dass solche Schweissverbindungen aufwendig zu produzieren sind.

In Fig. 9 ist eine weitere Ausführungsform der Erfindung gezeigt. Hier kommen einzelne Clinchverbindungen 13 zum Einsatz, um ein Stahlbauelement zu erstellen. Die entsprechende Verbindung wird als Einzelclinchverbindung bezeichnet.

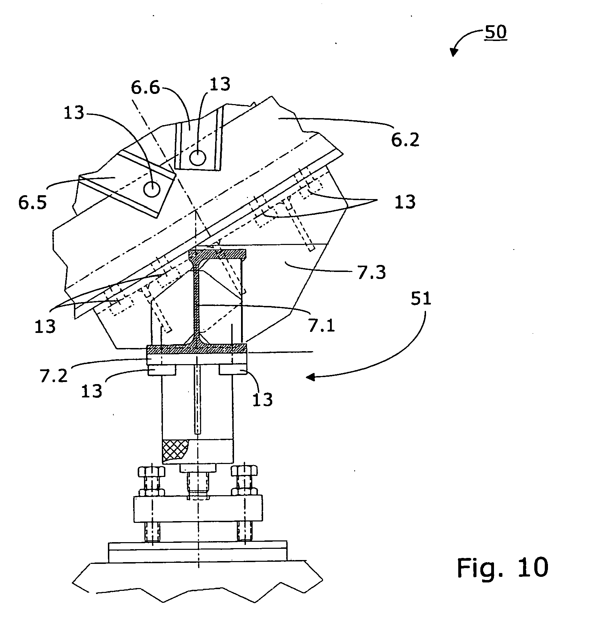

In Fig. 10 ist eine weitere Ausführungsform der Erfindung gezeigt. Hier kommen wiederum Clinchverbindungen 13 zum Einsatz, um zum Beispiel ein (Mitten- bzw. Mittel-)Auflager 51 in Stahlbauweise zu erstellen. Dieses (Mitten- bzw. Mittel-)Auflager 51 kann Teil eines Stahlbauelements 50, 5 für den Einsatz im Fahrsteigbau oder Fahrtreppenbau sein. Ein Stahlprofil 7.1 ruht, wie schematisch angedeutet, auf einem Unteren Stahlprofil 7.2. Die beiden Stahlprofile sind mit Clinchverbindungen 13 miteinander verbunden. Weiters kann auch 7.1 und 7.3 mit 6.2 verclincht sein und eine bzw. einige Clinchverbindungen 13 aufweisen. Auf dem Stahlprofil 7.1 ruht ein längsträger bzw. Profilträger 6.2. An diesem Längsträger bzw. Profilträger 6.2 sind mehrere Flachbleche bzw. Flacheisen oder Blechprofile bzw. Stahlprofile 6.5, 6.6 mit Clinchverbindungen 13 befestigt.

Gemäss Erfindung können auch Stahlbauelement aufgebaut werden, die Teil einer Aufzugsanlage sind. So kann zum Beispiel das erste Metallwerkstück 11 ein Stütz- oder Tragelement oder Fixierelement einer Aufzugskabine sein. Bei dem zweiten Metallwerkstück 12 handelt es sich dann um ein Flachblech bzw. Flacheisen oder Blechprofil bzw. Stahlprofil, das mittels einer oder zwei oder drei oder mehrerer Clinchverbindungen 13 an dem Stütz- oder Tragelement oder Fixierelement befestigt ist. So kann zum Beispiel der Rahmen oder der Fangrahmen einer Aufzugskabine aus stabilen Stahlträgern 11 aufgebaut werden, die mehrere Verstrebungen aus Blech oder Stahlprofilen aufweisen. Diese verstrebungen sind an den Stahlträgern festgeclincht. Weiters kann der Windenrost oder der Antriebsrost oder der Antriebstrager oder der Maschinenbock oder das Windengestell oder der Maschinenrahmen mit Stahlprofilen bzw. Blechen zusammengeclincht sein.

Das erste Metallwerkstück 11 kann aber auch ein Stütz- oder Rahmenelenent eines Gegengewichts bzw. eines Gegengewichtrahmens oder eines Gegengewichtkorbes einer Aufzugsanlage sein. In diesem Fall handelt es sich dann bei dem zweitem Metallwerkstück 12 um ein Flachblech bzw. Flacheisen oder Blechprofil bzw. Stahlprofil, das mittels einer oder zweier oder dreier oder mehrerer Clinchverbindungen 13 an dem Stütz- oder Rahmenelement befestigt ist.

Mit dem erfindungsgemensen Stempelwerkzeug 20 kann man auch zwei Clinchverbindungen 13 nebeneinander anbringen (siehe Fig. 8A und Fig. 8B), um die Zugfestigkeit und Scherfestigkeit weiter zu erhöhen. In diesem Fall hat sich erwiesen, dass die Zugfestigkeit auf Werte erhöht werden konnte, die nahezu doppelt so gross sind wie bei einer einzelnen Clinchverbindung 13. Die Proben konnten im Mittel mit ca. 118 kN belastet werden.

Ein besonders vorteilhaftes Clinchwerkzeug 20 weist zwei gleichartige. Stempel auf, die nebeneinander angeordnet sind und das erste Metallwerkstück 11 mit dem zweiten Metallwerkstück 12 durch zwei Clinchverbindungen zu verbinden in der Lage sind. Hier wenden mit einer Zustellbewegung und einer Einsenkbewegung gleichzeitig zwei Clinchverbindungen nebeneinander erzeugt. Das Beispiel einer entsprechenden Doppelclinchverbindung ist in Fig. 8A und 8B gezeigt. Im gezeigten Beispiel ist zu erkennen, dass gemäss Erfindung zum Beispiel ein dicker Stahlprofilträger 11, 6.1 (erstes Metallwerkstück) mit einem dünneren Blech bzw. Flacheisen bzw. Stahlprofil bzw. Blechprofil 12, 6.3, 6.4 (zweites Metallwerkstück) durch zwei nebeneinander liegende Clinchverbindungen 13 verbunden werden kann.

Gemäss Erfindung können Clinchverbindungen 13 ohne Schneidanteil auch mit öffnender Matrize erzeugt werden. Dabei werden federnd gelagerte Lamellen der Matrize nach dem Einsenkprozess durch das radiale Fließen des Werkstückmaterials unterhalb des Stempels nach außen gedrückt und somit die Hinterschnittausbildung ermöglicht.

Neben den vorteilen des konventionellen Clinchens kann auch das Matrizenloseclinchen eingesetzt werden, das aufgrund seines speziellen Funktionsprinzips die folgenden Vorteile aufweist:
- Ein versatz zwischen (Füge) Stempel und Gegenwerkzeug (Amboss) beeinträchtigt die Qualität der Verbindung 13 nicht. Dadurch verringern sich die Genauigkeitsanforderungen an die Fügemaschine.
- Zeitaufwändige Einrichtarbeiten können entfallen.
- Der verschleiß sinkt und die Prozesssicherbeit steigt, da keine Ausbrüche an der Matrizenkante mehr auftreten können.
- Für alle Fügeaufgaben kann der gleiche Amboss verwendet werden. Ein Matrizenwechsel beim Wechsel der Fügeaufgabe, wie beim herkömmliche Clinchen ist nicht mehr notwendig.
- Die Fügeverbindungen 13 sind flacher und weniger störend als die mit dem konventionellen Clinchen erzeugten Verbindungen.
- Ein Ändern der Blechdicke ist ohne Werkzeugwechsel möglich und spart wertvolle Arbeitszeit.
- Eine Änderung der werkstoffpaarung geht ohne Aufwand vonstatten.
- Matrizenloses Clinchen erhöht die Anzahl der Clinchverbindungen bzw. Fügepunkte pro Werkzeugsatz bzw. pro (Füge) Stempel.

## Patentansprüche

1. Verfahren zum Herstellen einer tragfähigen Stahlbauverbindung, wobei mittels eines Stempelwerkzeuges (20) und eines Gegenwerkzeuges (30) durch lokale Umformung eine Clinchverbindung (13) geformt wird, die ein erstes Metallwerkstück (11; 6.1, 6.2; 7.1) mit einem zweiten Metallwerkstück (12; 6.3, 6.4, 6.5, 6.6; 7.2, 7.3) verbindet, mit den Schritten:
- Aufeinanderlegen und Ausrichten des ersten Metallwerkstücks (11; 6.1, 6.2; 7.1) und des zweiten Metallwerkstücks (12; 6.3, 6.4, 6.5, 6.6; 7.2, 7.3) auf einer Bearbeitungsfläche des Gegenwerkzeuges (30),
- Zustellen eines Stempels des Stempelwerkzeuges (20),
- Einsenken des Stempels in die beiden aufeinandergelegten Metallwerkstücke (11; 12; 6.1, 6.3; 6.4; 6.2, 6.5, 6.6; 7.1, 7.2, 7.3), bis durch lokale Umformung die Clinchverbindung (13) geformt wurde,
- Herausziehen des Stempels, wobei
- das erste Metallwerkstück (11; 6.1, 6.2; 7.1) eine erste Werkstückdicke (t1) und das zweite Metallwerkstück (12; 6.3, 6.4, 6.5, 6.6; 7.2, 7.3) eine zweite Werkstückdicke (t2) aufweist, die zusammen eine Gesamtwerkstückdicke (tt) ergeben, die dicker ist als 8mm, und wobei
- der Stempel in Bezug auf eine Rotationsachse (24) rotationssymmetrisch ausgelegt ist und mindestens einen konisch geformten Übergangsbereich (21, 22) aufweist, der sich in Einsenkrichtung des Stempels mit einem Winkel (W, W1, W2) verjüngt, **dadurch gekennzeichnet, dass** der Flankenwinkel (W, W1, W2) übergeht von einem ersten Winkel (W1) eines unteren, konischen Übergangsbereichs (21), der in die Stirnendfläche (23) führt, zu einem zweiten Winkel (W2) eines oberen, konischen Übergangsbereichs (22), wobei der erste Winkel (W1) größer ist als der zweite Winkel (W2), und dass bei der Umformung der Stempel auch im oberen konischen Übergangsbereich (22) zumindest zum Teil in die Metallwerkstücke (11,12) eingesenkt wird.

2. Verfahren nach Anspruch 1, **dadurch gekennzeichnet, dass** es sich um eine Stahlbauverbindung handelt, bei welcher ein Stahlprofil oder Stahlträger oder Stahlblech oder Formrohr oder (NIRO, ALU, CU)-Blech oder Stahlblechprofil (6.1, 6.2; 7.1) als erstes Metallwerkstück (11) und ein Stahlblech oder Stahlprofil oder Formrohr oder (NIRO, ALU, CU)-Blech oder Stahlblechprofil (6.3, 6.4, 6.5, 6.6, 7.2, 7.3) als zweites Metallwerkstück (12) eingesetzt wird.

3. Verfahren nach Anspruch 2, **dadurch gekennzeichnet, dass** die erste Werkstückdicke (t1) grösser ist als die zweite Werkstückdicke (t2) und wobei vorzugsweise die erste Werkstückdicke (t1) grösser gleich 4mm und die zweite Werkstückdicke (t1) grösser gleich 3mm betragen.

4. Verfahren nach einem der vorhergehenden Ansprüche, **dadurch gekennzeichnet, dass** ein Stempel ausgewählt wird, dessen konisch geformter. Übergangsbereich (21, 22) eine Länge L hat, die wie folgt von der Gesamtwerkstückdicke (tt) abhängt: 0, 3 tt ≤ L ≤ 2 tt, wobei vorzugsweise gilt, dass L kürzer und kleiner ist als tt, wobei in einem Vorzugsfall L ≤ 0,5 tt gilt.

5. Verfahren nach einem der vorhergehenden Anspruch, **dadurch gekennzeichnet, dass** ein Stempel ausgewählt wird, dessen Durchmesser (D2) bei einer Gesamtwerkstückdicke (tt) die dicker ist als 8mm, zwischen 10 und 30 mm bzw. 35mm beträgt, wobei der Durchmesser (D2) vorzugsweise zwischen 12 und 20mm bzw. 25mm (einschliesslich) liegt.

6. Verfahren nach einem der vorhergehenden Ansprüche, **dadurch gekennzeichnet, dass** ein Abstreifer (40) beim Herausziehen des Stempels eingesetzt wird, um nach dem Clinchen der Metallwerkstücke (11; 6.1, 6.2; 7.1; 12; 6.3, 6.4, 6.5, 6.6; 7.2, 7.3) ein Trennen zu ermöglichen.

7. Verfahren nach Anspruch 5 und/oder 6, **dadurch gekennzeichnet, dass** der Abstreifer (40) vor dem Trennen gegen eine Oberfläche (15) des ersten Metallwerkstücks (11; 6.1, 6.2; 7.1) zugestellt wird und dass beim Trennen mittels des Abstreifers (40) eine Trennkraft gegen die Metallwerkstücke (11; 6.1, 6.2; 7.1; 12; 6.3, 6.4, 6.5, 6.6; 7.2, 7.3) ausgeübt wird, während eine in entgegen gesetzter Richtung wirkende Rückhubkraft den Stempel zurück zieht, wobei die Trennkraft bei einer Gesamtwerkstückdicke (tt), die dicker ist als 8mm, kleiner ist als 45kN.

8. Verfahren nach einem der vorhergehenden Ansprüche, **dadurch gekennzeichnet, dass** zeitgleich zwei gleichartige Stempel zum Einsatz kommen, die nebeneinander angeordnet sind und das erste Metallwerkstück (11; 6.1, 6.2; 7.1) mit dem zweiten Metallwerkstück (12; 6.3, 6.4, 6.5, 6.6; 7.2, 7.3) nach dem Einsenken und Herausziehen des Stempels durch zweibenachbarte Clinchverbindungen (13) verbunden sind.

9. Verwendung eines Clinchwerkzeugs (20) zum Herstellen eines tragfähigen Stahlbauelements (5; 50) aus zwei Metallwerkstücken (11; 6.1, 6.2; 7.1; 12; 6.3, 6.4, 6.5, 6.6; 7.2, 7.3), wobei die Metallwerkstücke (11; 6.1, 6.2; 7.1; 12; 6.3, 6.4, 6.5, 6.6; 7.2, 7.3) mindestens durch eine Clinchverbindung (13) miteinander verbunden sind, und wobei das Clinchwerkzeug (20) einen Stempel mit konisch geformtem Übergangsbereich (21, 22) mit einem Flankenwinkel (W, W1, W2) aufweist, **dadurch gekennzeichnet, dass** der Flankenwinkel (W, W1, W2) von einem ersten Winkel (W1) eines unteren konischen Übergangsbereichs (21), der in die Stirnendfläche (23) führt, zu einem zweiten Winkel (W2) eines oberen konischen Übergangsbereichs (22) übergeht, wobei der erste Winkel (W1) größer ist als der zweite Winkel (W2) und dass bei der Umformung der Stempel auch im oberen konischen Übergangsbereich (22) zumindest zum Teil in die Metallwerkstücke (11, 12) eingesenkt wird, so dass eine werkstückseitige Stirnfläche (23) des Stempels einen geringfügig kleineren werkstückseitigen Durchmesser (D1) hat als der werkzeugseitige Durchmesser (D2) des Stempels.

10. Verwendung nach Anspruch 9, **dadurch gekennzeichnet, dass** ein erstes Werkstück (11; 6.1, 6.2; 7.1) des Stahlbauelements (5; 50) eine erste Werkstückdicke (t1) und ein zweites Werkstück (12; 6.3, 6.4, 6.5, 6.6; 7.2, 7.3) des Stahlbauelements (5; 50) eine zweite Werkstückdicke (t2) aufweisen, wobei die erste Werkstückdicke (t1) grösser ist als die zweite Werkstückdicke (t2) und wobei vorzugsweise die erste Werkstückdicke (t1) grösser gleich 4mm und die zweite Werkstückdicke (t1) grösser gleich 3mm betragen und die Gesamtwerkstückdicke (tt) dicker ist als 8mm.

11. Verwendung nach Anspruch 9 und/oder 10, **dadurch gekennzeichnet, dass** das erste Werkstück (11) ein Stahlprofil oder Stahlträger oder Stahlblech oder Formrohr oder (NIRO, ALU, CU)-Blech oder Stahlblechprofil (6.1, 6.2; 7.1) und das zweite Metallwerkstück (12) ein Stahlblech oder Stahlprofil oder Formrohr oder (NIRO, ALU, CU)-Blech oder Stahlblechprofil (6.3, 6.4, 6.5, 6.6; 7.2, 7.3) ist.

12. Verwendung nach einem der vorhergehenden Ansprüche 9 bis 11, **dadurch gekennzeichnet, dass** die Clinchverbindung (13) für eine Zugbelastung von mindestens 40kN ausgelegt ist.

## Claims

1. Method of producing a load-bearing steel construction connection, wherein a clinch connection (13) connecting a first metal workpiece (11; 6.1, 6.2; 7.1) with a second metal workpiece (12; 6.3, 6.4, 6.5, 6.6; 7.2, 7.3) is formed by local deformation by means of a die tool (20) and a counter-tool (30), comprising the steps:
- placing one on the other and aligning the first metal workpiece (11; 6.1, 6.2; 7.1) and the second metal workpiece (12; 6.3, 6.4, 6.5, 6.6; 7.2, 7.3) on a processing surface of the counter-tool (30),
- advancing a die of the die tool (20),
- sinking the die into the two metal workpieces (11; 12; 6.1, 6.3; 6.4; 6.2, 6.5, 6.6; 7.1, 7.2, 7.3), which are placed one on the other, until the clinch connection (13) is formed by local deformation and
- withdrawing the die, wherein
- the first metal workpiece (11; 6.1, 6.2; 7.1) has a first workpiece thickness (t1) and the second metal workpiece (12; 6.3, 6.4, 6.5, 6.6; 7.2, 7.3) has a second workpiece thickness (t2) which together give a total workpiece thickness (tt) thicker than 8 millimetres, and wherein
- the die is designed to be rotationally symmetrical with respect to a rotational axis (24) and has at least one conically shaped transition region (21, 22) which narrows at an angle (W, W1, W2) in the direction of sinking in of the die,
**characterised in that** the flank angle (W, W1, W2) change over from a first angle (W1) of a lower conical transition region (21), which leads into the end surface (23), to a second angle (W2) of an upper conical transition region (22), wherein the first angle (W1) is greater than the second angle (W2) and that during the reshaping the die also in the upper conical transition region (22) is at least partly sunk into the metal workpieces (11, 12).

2. Method according to claim 1, **characterised in that** a steel construction connection is concerned in which a steel profile member, steel girder, steel plate, shaped tube, stainless-steel, aluminium or copper plate or steel plate profile member (6.1, 6.2; 7.1) is used as first metal workpiece (11) and a steel plate, steel profile member, shaped tube, stainless-steel, aluminium or copper plate or steel plate profile member (6.3, 6.4, 6.5, 6.6, 7.2, 7.3) is used as second metal workpiece (12).

3. Method according to claim 2, **characterised in that** the first workpiece thickness (t1) is greater than the second workpiece thickness (t2) and wherein the first workpiece thickness (t1) is preferably greater than or equal to 4 millimetres and the second workpiece thickness (t1) is preferably greater than or equal to 3 millimetres.

4. Method according to any one of the preceding claims, **characterised in that** a die is selected having a conically shaped transition region (21, 22) with a length L depending on the total workpiece thickness (tt) as follows: 0.3 tt ≤ L ≤ tt, wherein preferably L is shorter and smaller than tt and wherein in a preferred case L ≤ 0.5 tt.

5. Method according to any one of the preceding claims, **characterised in that** a die is selected having a diameter (D2) between 10 and 30 millimetres or 35 millimetres for a total workpiece thickness (tt) thicker than 8 millimetres, wherein the diameter (D2) preferably lies between 12 and 20 millimetres or 25 millimetres (inclusive).

6. Method according to any one of the preceding claims, **characterised in that** a stripper (40) is used on withdrawal of the die so as to enable separation after clinching of the metal workpieces (11; 6.1, 6.2; 7.1; 12; 6.3, 6.4, 6.5, 6.6; 7.2, 7.3).

7. Method according to claim 5 and/or 6, **characterised in that** the stripper (40) is advanced towards a surface (15) of the first metal workpiece (11; 6.1, 6.2; 7.1) prior to the separation and that during the separation a separating force is exerted relative to the metal workpieces (11; 6.1, 6.2; 7.1; 12; 6.3, 6.4, 6.5, 6.6; 7.2, 7.3) by means of the stripper (40) while a return stroke force acting in opposite direction draws the die back, wherein the separating force is less than 45 kN for a total workpiece thickness (tt) thicker than 8 millimetres.

8. Method according to any one of the preceding claims, **characterised in that** two identical dies arranged adjacent to one another are used simultaneously and the first metal workpiece (11; 6.1, 6.2; 7.1) is connected with the second metal workpiece (12; 6.3, 6.4, 6.5, 6.6; 7.2, 7.3) by two adjacent clinch connections (13) after the sinking in and withdrawal of the die.

9. Use of a clinching tool (20) for producing a load-bearing steel construction element (5; 50) from two metal workpieces (11; 6.1, 6.2; 7.1; 12; 6.3, 6.4, 6.5, 6.6; 7.2, 7.3), wherein the metal workpieces (11; 6.1, 6.2; 7.1; 12; 6.3, 6.4, 6.5, 6.6; 7.2, 7.3) are connected together at least by a clinch connection (13), and wherein the clinching tool (20) comprises a die with conically shaped transition region (21, 22) with a flank angle (W, W1, W2), **characterised in that** the flank angle (W, W1, W2) change over from a first angle (W1) of a lower conical transition region (21), which leads into the end surface (23), to a second angle (W2) of an upper conical transition region (22), wherein the first angle (W1) is greater than the second angle (W2) and that during the reshaping the die also in the upper conical transition region (22) is at least partly sunk into the metal workpieces (11, 12), so that an end face (23) of the die at the workpiece side has a slightly smaller diameter (D1) at the workpiece side than the diameter (D2) of the die at the tool side.

10. Use according to claim 9, **characterised in that** a first workpiece (11; 6.1, 6.2; 7.1) of the steel construction element (5; 50) has a first workpiece thickness (t1) and a second workpiece (12; 6.3, 6.4, 6.5, 6.6; 7.2, 7.3) of the steel construction element (5; 50) has a second workpiece thickness (t2), wherein the first workpiece thickness (t1) is greater than the second workpiece thickness (t2) and wherein the first workpiece thickness (t1) is preferably greater than or equal to 4 millimetres and the second workpiece thickness (t1) is preferably greater than or equal to 3 millimetres and the total workpiece thickness (tt) is thicker than 8 millimetres.

11. Use according to claim 9 and/or 10, **characterised in that** the first workpiece (11) is a steel profile member, steel girder, steel plate, shaped tube, stainless-steel, aluminium or copper plate or steel plate profile member (6.1, 6.2; 7.1) and the second metal workpiece (12) is a steel plate, steel profile member, shaped tube, stainless-steel, aluminium or copper plate or steel plate profile member (6.3, 6.4, 6.5, 6.6; 7.2, 7.3).

12. Use according to any one of the preceding claims 9 to 11, **characterised in that** the clinch connection (13) is designed for a tensile loading of at least 40 kN.

## Revendications

1. Procédé pour fabriquer une liaison pour construction porteuse en acier, selon lequel on forme à l'aide d'un outil à poinçon (20) et d'un outil opposé (30), par déformation locale, une liaison par clinchage (13) qui relie une première pièce métallique (11 ; 6.1, 6.2 ; 7.1) à une seconde pièce métallique (12 ; 6.3, 6.4, 6.5, 6.6 ; 7.2, 7.3), avec les étapes qui consistent :
- à superposer et aligner la première pièce métallique (11 ; 6.1, 6.2 ; 7.1) et la seconde pièce métallique (12 ; 6.3, 6.4, 6.5, 6.6 ; 7.2, 7.3) sur une surface de traitement de l'outil opposé (30),
- à avancer un poinçon de l'outil (20),
- à enfoncer le poinçon dans les deux pièces métalliques (11 ; 12 ; 6.1, 6.3 ; 6.4 ; 6.2, 6.5, 6.6 ; 7.1, 7.2, 7.3) superposées, jusqu'à ce que la liaison par clinchage (13) soit formée par déformation locale,
- à retirer le poinçon, étant précisé
- que la première pièce métallique (11 ; 6.1, 6.2 ; 7.1) présente une première épaisseur de pièce (t1) tandis que la seconde pièce métallique (12 ; 6.3, 6.4, 6.5, 6.6 ; 7.2, 7.3) présente une seconde épaisseur de pièce (t2), qui donnent ensemble une épaisseur de pièce totale (tt) supérieure à 8 mm, et
- que le poinçon présente une symétrie de révolution par rapport à un axe de rotation (24) et comporte au moins une zone de transition conique (21, 22) qui va en rétrécissant dans le sens d'enfoncement avec un angle (W, W1, W2),
**caractérisé en ce que** l'angle de flancs (W, W1, W2) passe d'un premier angle (W1) d'une zone de transition conique inférieure (21) qui mène à la surface d'extrémité frontale (23), à un second angle (W2) d'une surface de transition conique supérieure (22), le premier angle (W1) étant supérieur au second angle (W2), et **en ce que** lors de la déformation, le poinçon est enfoncé au moins en partie dans les pièces métalliques (11, 12) même dans la zone de transition conique supérieure (22).

2. Procédé selon la revendication 1, **caractérisé en ce qu'**il s'agit d'une liaison pour construction en acier, avec laquelle un profilé en acier ou une poutre en acier ou une tôle en acier ou un tube profilé ou une tôle en inox, en aluminium ou en cuivre ou un profilé en tôle en acier (6.1, 6.2 ; 7.1) est utilisé comme première pièce métallique (11), et une tôle en acier ou un profilé en acier ou un tube profilé ou une tôle en inox, en aluminium ou en cuivre ou un profilé en tôle en acier (6.3, 6.4, 6.5, 6.6, 7.2, 7.3) est utilisé comme seconde pièce métallique (12).

3. Procédé selon la revendication 2, **caractérisé en ce que** la première épaisseur de pièce (t1) est supérieure à la seconde épaisseur de pièce (t2), et de préférence la première épaisseur de pièce (t1) est supérieure ou égale à 4 mm et la seconde épaisseur de pièce (t2) est supérieure ou égale à 3 mm.

4. Procédé selon l'une des revendications précédentes, **caractérisé en ce qu'**on choisit un poinçon dont la zone de transition conique (21, 22) a une longueur L qui dépend de l'épaisseur de pièce totale (tt) de la manière suivante : 0,3 tt ≤ L ≤ 2 tt, étant précisé que L est de préférence plus courte et inférieure à tt, et que dans un cas préféré L ≤ 0,5 tt.

5. Procédé selon l'une des revendications précédentes, **caractérisé en ce qu'**on choisit un poinçon dont le diamètre (D2) pour une épaisseur de pièce totale (tt) de plus de 8 mm est situé entre 10 et 30 mm ou 35 mm, le diamètre (D2) étant situé de préférence entre 12 et 20 mm ou 25 mm (inclus).

6. Procédé selon l'une des revendications précédentes, **caractérisé en ce qu'**on utilise un dévêtisseur (40) lorsque le poinçon est retiré, afin de permettre une séparation après le clinchage des pièces métalliques (11 ; 6.1, 6.2 ; 7.1 ; 12 ; 6.3, 6.4, 6.5, 6.6 ; 7.2, 7.3).

7. Procédé selon les revendications 5 et/ou 6, **caractérisé en ce qu'**un dévêtisseur (40), avant la séparation, est avancé contre une surface (15) de la première pièce métallique (11 ; 6.1, 6.2 ; 7.1) et **en ce que** lors de la séparation, une force de séparation est exercée à l'aide du dévêtisseur (40) contre les pièces métalliques (11 ; 6.1, 6.2 ; 7.1 ; 12 ; 6.3, 6.4, 6.5, 6.6 ; 7.2, 7.3), tandis qu'une force de retour qui agit en sens inverse ramène le poinçon, la force de séparation, pour une épaisseur de pièce totale (tt) de plus de 8 mm, étant inférieure à 45 kN.

8. Procédé selon l'une des revendications précédentes, **caractérisé en ce qu'**on utilise en même temps deux poinçons de même type qui sont disposés côte à côte, et la première pièce métallique (11 ; 6.1, 6.2 ; 7.1) est reliée à la seconde pièce métallique (12 ; 6.3, 6.4, 6.5, 6.6 ; 7.2, 7.3) par des liaisons par clinchage voisines (13), après que le poinçon a été abaissé et retiré.

9. Utilisation d'un outil de clinchage (20) pour fabriquer un élément de construction porteur en acier (5 ; 50) à partir de deux pièces métalliques (11 ; 6.1, 6.2 ; 7.1 ; 12 ; 6.3, 6.4, 6.5, 6.6 ; 7.2, 7.3), étant précisé que les pièces métalliques (11 ; 6.1, 6.2 ; 7.1 ; 12 ; 6.3, 6.4, 6.5, 6.6 ; 7.2, 7.3) sont reliées au moins par une liaison par clinchage (13), et que l'outil de clinchage (20) comporte un poinçon pourvu d'une zone de transition conique (21, 22) avec un angle de flancs (W, W1, W2),
**caractérisée en ce que** l'angle de flancs (W, W1, W2) passe d'un premier angle (W1) d'une zone de transition conique inférieure (21) qui mène à la surface d'extrémité frontale (23), à un second angle (W2) d'une surface de transition conique supérieure (22), le premier angle (W1) étant supérieur au second angle (W2), et **en ce que** lors de la déformation, le poinçon est enfoncé au moins en partie dans les pièces métalliques (11, 12) même dans la zone de transition conique supérieure (22), de sorte qu'une surface frontale (23), située côté pièce, du poinçon a un diamètre côté pièce (D1) légèrement plus petit que le diamètre côté outil (D2) du poinçon.

10. Utilisation selon la revendication 9, **caractérisée en ce qu'**une première pièce (11 ; 6.1, 6.2 ; 7.1) de l'élément de construction en acier (5 ; 50) présente une première épaisseur de pièce (t1) tandis qu'une seconde pièce (12 ; 6.3, 6.4, 6.5, 6.6 ; 7.2, 7.3) de l'élément de construction en acier (5 ; 50) présente une seconde épaisseur de pièce (t2), étant précisé que la première épaisseur de pièce (t1) est supérieure à la seconde épaisseur de pièce (t2), et que de préférence la première épaisseur de pièce (t1) est supérieure ou égale à 4 mm, que la seconde épaisseur de pièce (t2) est supérieure ou égale à 3 mm, et que l'épaisseur de pièce totale (tt) est supérieure à 8 mm.

11. Utilisation selon la revendication 9 et/ou 10, **caractérisée en ce que** la première pièce (11) est constituée par un profilé en acier ou une poutre en acier ou une tôle en acier ou un tube profilé ou une tôle en inox, en aluminium ou en cuivre ou un profilé en tôle en acier (6.1, 6.2 ; 7.1) tandis que la seconde pièce métallique (12) est constituée par une tôle en acier ou un profilé en acier ou un tube profilé ou une tôle en inox, en aluminium ou en cuivre ou un profilé en tôle en acier (6.3, 6.4, 6.5, 6.6 ; 7.2, 7.3).

12. Utilisation selon l'une des revendications 9 à 11 précédentes, **caractérisée en ce que** la liaison par clinchage (13) est conçue pour une contrainte de traction d'au moins 40 kN.
